Europäisches Patentamt

European Patent Office

Office européen des brevets

(19)

(11) Veröffentlichungsnummer: **0 141 046**

**A2**

(12) # EUROPÄISCHE PATENTANMELDUNG

(21) Anmeldenummer: **84108408.0**

(22) Anmeldetag: **17.07.84**

(51) Int. Cl.⁴: **F 16 K 31/122**
**F 16 K 31/46**

(30) Priorität: **25.08.83 CH 4631/83**

(43) Veröffentlichungstag der Anmeldung:
**15.05.85 Patentblatt 85/20**

(84) Benannte Vertragsstaaten:
**DE FR GB IT NL**

(71) Anmelder: **GEORG FISCHER AKTIENGESELLSCHAFT**
**Mühlentalstrasse 105**
**CH-8201 Schaffhausen(CH)**

(72) Erfinder: **Hilpert, Bruno**
**Kirchgasse 3**
**CH-8253 Diessenhofen(CH)**

(72) Erfinder: **Hunziker, Bruno**
**Hochstrasse 286**
**CH-8200 Schaffhausen(CH)**

(54) **Ventileinrichtung mit einer fernsteuerbaren Betätigungseinrichtung.**

(57) Eine mit einem Druckmittel wie z.B. Druckluft arbeitende Betätigungseinrichtung (2) ist mittels einer Halterung (3 a) an einem Ventil (1 a) befestigt. Diese weist einen in einem Zylinderteil (12 a) geführten Kolben (14 a) auf, welcher eine Zahnstange (15 a) aufweist. Diese ist mit einem im Mittelteil (6) des Gehäuses (5) gelagerten Ritzelwelle (8) im Eingriff, welche mittels eines Kupplungsteiles (19 a) mit der Ventil-Körper-Welle (20) verbunden ist. Wird die gleiche Betätigungseinrichtung (2) für ein grösseres Ventil mit einem grösseren erforderlichen Verstelldrehmoment verwendet, kann anstelle des Gehäusedekkels (13) ein zweiter Zylinderteil mit einem zweiten gegenläufigen Kolben und Zahnstange montiert werden, wodurch sich das Drehmoment an der Ritzelwelle verdoppelt.

Fig. 1

GEORG FISCHER AKTIENGESELLSCHAFT,         8201 Schaffhausen

2388/FIP / 25.8.1983 / Li-mw /

Ventileinrichtung mit einer fernsteuerbaren Betätigungseinrichtung

Die Erfindung betrifft eine Ventileinrichtung mit einer
fernsteuerbaren Betätigungseinrichtung, wie sie im
Oberbegriff von Anspruch 1 gekennzeichnet ist.

Eine bekannte Ventileinrichtung der eingangs genannten Art
(DE-OS 2733195), weist einen beidseitig durch ein Druckmedium beaufschlagbaren Kolben für die Betätigung des
als Kugelkükens ausgebildeten Ventilkörpers auf.

Durch die gegebene Kolbengrösse wird bei einem normalen
Leitungsdruck (z.B. Pressluftnetz) immer ein bestimmtes
Verstell-Drehmoment erzeugt, sodass diese Betätigungseinrichtung nicht rationell mit möglichst niedrigen Betriebskosten für verschiedene Ventilgrössen mit unterschiedlichen Durchflussquerschnitten verwendbar ist. Auch
bei der in der DE-OS 2733196 gezeigten kraftbetriebenen
Ventilbetätigungsanordnung mit zwei gegenläufigen Kolben
ist eine unterschiedliche Anpassung des Verstelldrehmomentes bei annähernd gleichem Betriebsdruck an verschiedene Ventilgrössen nicht möglich.

Dies erfordert entweder für verschiedene Ventilgruppengrössen unterschiedliche Baugrössen der Betätigungseinrichtungen oder deren Ueberdimensionierung bei der Verwendung bei den kleinen Ventilgrössen, was höhere als
erforderliche Betriebskosten verursacht.

Aufgabe der vorliegenden Erfindung ist die Schaffung einer
Ventileinrichtung der eingangs genannten Art, deren Betätigungseinrichtung bei nur einer Kolbendimension durch
einfache Mittel an Ventile mit unterschiedlichen Nennweiten anpassbar ist.

Erfindungsgemäss wird diese Aufgabe durch die kennzeichnenden Merkmale von Anspruch 1 gelöst.

Weitere vorteilhafte Ausgestaltungen der Erfindung sind
in den abhängigen Ansprüchen gekennzeichnet.

Durch den einfachen Umbau der Betätigungseinrichtung
von einem Kolben auf zwei gegenläufige Kolben kann das
Verstell-Drehmoment verdoppelt werden, wodurch sich der
Einsatzbereich der Betätigungseinrichtung bei einer
rationellen Arbeitsweise wesentlich erweitert.

Die Erfindung ist anhand von Ausführungsbeispielen in
den beiliegenden Zeichnungen dargestellt und nachfolgend
beschrieben. Es zeigen:

Fig. 1          ein Ventil in Ansicht mit einer in Längsschnitt dargestellten Betätigungseinrichtung,

Fig. 2        einen Schnitt entlang der Linie II - II von
             Fig. 1,

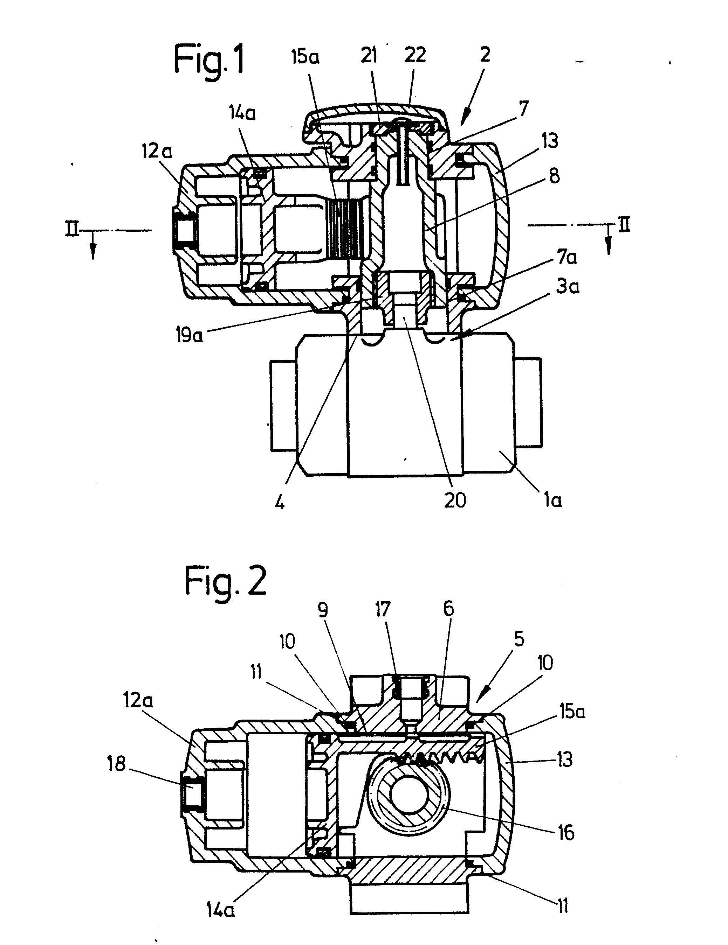

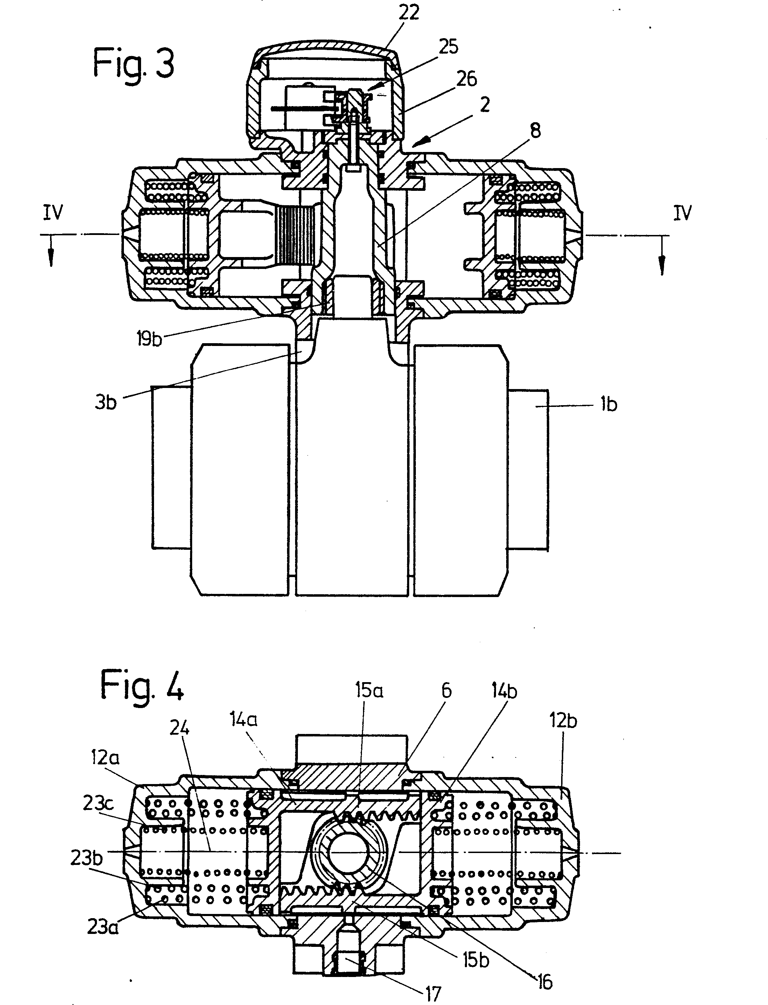

Fig. 3        eine Montagevariante von Fig. 1 mit einem
             baugrösseren Ventil,

Fig. 4        einen Schnitt entlang der Linie IV - IV von
             Fig. 3,

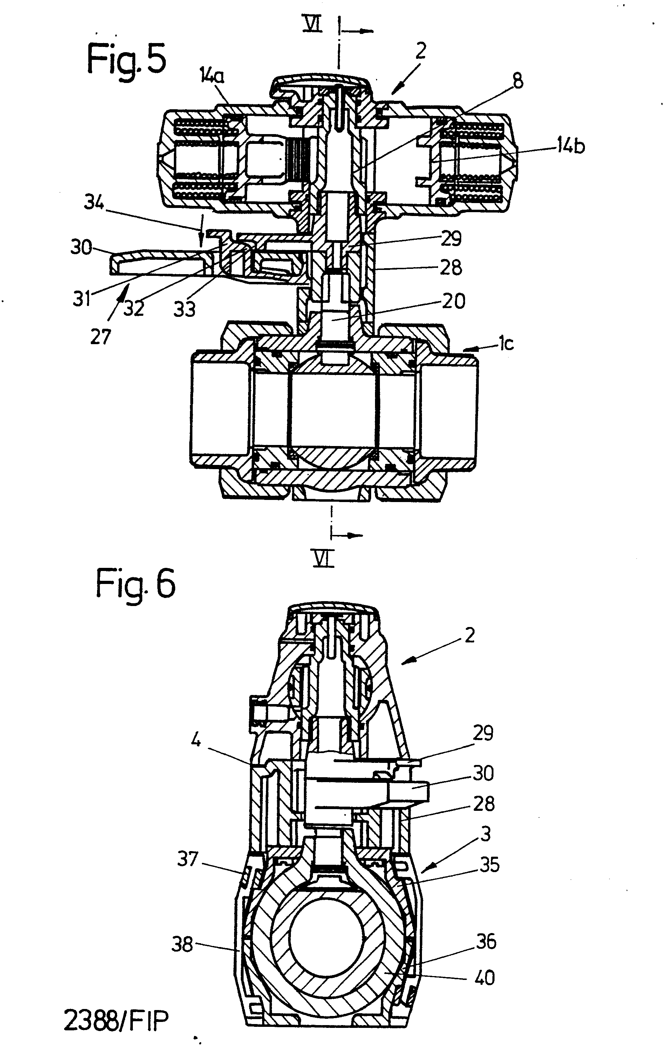

Fig. 5        einen Längsschnitt durch einen Kugelhahn mit einer Betätigungseinrichtung
             gemäss Fig. 3 und einer Handbetätigungsvorrichtung und

Fig. 6        einen Schnitt entlang der Linie VI - VI von
             Fig. 5.

Die Fig. 1 zeigt ein Ventil 1 a mit einer fernsteuerbaren
Betätigungseinrichtung 2. Eine Halterung 3a ist mittels
Klemmverbindungen (siehe Fig. 6 pos. 3) mit dem Ventil 1 a
fest verbunden und weist eine Basis 4 zur Befestigung der
Betätigungseinrichtung 2 auf. Das Gehäuse 5 der Betätigungseinrichtung 2 weist wie aus den Fig. 1 und 2 ersichtlich
ein Mittelteil 6 auf, welches mit zwei Lagerbohrungen
7, 7 a für eine Ritzelwelle 8 und einer quer dazu verlaufenden durchgehenden Bohrung 9 versehen ist. An den
beiden Enden der Bohrung 9 sind zueinander symmetrische
Zentrierbohrungen 10 und Befestigungs-Flächen 11 angeordnet, welche zu einer koaxialen Befestigung z.B. mittels
Schrauben eines Zylinderteiles 12 a an einer Seite und
eines Gehäusedeckels 13 an der anderen Seite dienen. Durch
die symmetrische Ausbildung des Mittelteils 6 kann das
Zylinderteil 12 a entweder links oder rechts oder an beiden Seiten (siehe Fig. 3 und 4) befestigt werden.

Im Zylinderteil 12 a ist ein Kolben 14 a angeordnet, welcher
mit einer in der Bohrung 9 geführten und mit einem Ritzel
16 im Eingriff stehenden Zahnstange 15 a versehen ist.
Der Kolben 14 a ist beidseitig mittels eines Druckmediums -
vorzugsweise Druckluft - beaufschlagbar, wodurch er in die
beiden .in den Fig. 1 und 2 gezeigten Endstellungen verschiebbar ist. Die Zuführung des Druckmediums erfolgt über
nicht dargestellte Leitungen, welche durch einen Rohrleitungsanschluss 17 am Mittelteil 6 und einen Rohrleitungsanschluss 18 am Zylinderteil 12 a mit der Betätigungseinrichtung verbunden werden.

Die Ritzelwelle 8 ist durch eine Steckverbindung drehfest
mit einem Kupplungsteil 19 a verbunden, welches an das verwendete Ventil 1 a angepasst fest mit der Ventilkörper-
welle 20 verbunden ist. Zur Montage in der Baugrösse und
Bauform unterschiedlicher Ventile mit der Betätigungseinrichtung sind nur entsprechend an die Ventile angepasste Kupplungsteile 19 a bzw. 19 b und Halterungen 3 a
bzw. 3 b erforderlich (siehe auch Fig. 3 und 4). Am oberen
stirnseitigen Ende der Ritzelwelle 8 ist eine Ventil-
Stellungs-Anzeige 21 angeordnet, welche durch einen durchsichtigen Deckel 22 erkennbar ist.

Die Fig. 3 und 4 zeigt ein Ventil 1 b mit grösserem
Durchflussquerschnitt mit der Betätigungseinrichtung 2,
welche ein erhöhtes Verstelldrehmoment aufweist. Dies wird
bei gleichen Bauteilen durch die Anordnung von zwei
gegenläufigen Kolben 14 a und 14 b in den an das Mittelteil
6 angeschraubten Zylinderteilen 12 a und 12 b erreicht.
Der in den Fig. 1 und 2 gezeigte Gehäusedeckel 13 wird hierbei durch den Zylinderteil 12 b ersetzt.

Als weitere Bauvariante mit gleichen Bauteilen ist in den Fig. 3 und 4 die Möglichkeit, der Anordnung von Federn zur Erzeugung der Schliess- oder Oeffnungsbewegung des Ventils dargestellt.

Es können z.B. bis zu drei Federn 23 a, 23 b, 23 c zwischen einem Kolben und einer Zylinder-Stirnwand eingebaut werden, wodurch verschieden grosse Verstell-Drehmomente und/oder Federkarakteristiken erzeugbar sind.

Das Druckmedium wird durch den Rohrleitungsanschluss 17 am Mittelteil 6 zu den Kolbeninnenseiten zugeführt, wodurch die beiden Kolben gleichzeitig gegen den Druck der Federn voneinander bewegt werden. Bei der Bewegung der Kolben mittels dem Druckmedium entsteht bei der in Fig. 4 gezeigten Einbaulage der Zahnstangen 15 a, 15 b eine gegen den Uhrzeigersinn drehende Ritzelbewegung was z.B. einer Auf-Zu-Bewegung des Ventilkörpers entspricht. Soll diese Bewegung umgekehrt werden, können die beiden Kolben 14 a und 14 b um ihre Längsachse 24 um 180° gedreht werden, wodurch die Ritzeldrehrichtung sich umkehrt. Hierfür weist das Ritzel 16 eine durch vier teilbare Zähnezahl auf.

Als Ausbauvariante weist die Betätigungsvorrichtung 2 gemäss Fig. 3 einen elektrische Signale erzeugenden Ventil-Stellungs-Melder 25 auf, welcher in einem auf das Mittelteil 6 aufsteckbaren Gehäuse 26 untergebracht und mit dem durchsichtigen Deckel 22 abgedeckt ist.

Die Fig. 5 und 6 zeigen eine weitere Ausbaumöglichkeit der Ventileinrichtung, indem zwischen das als Kugelhahn ausgebildete Ventil 1 c und der Betätigungseinrichtung 2 eine Handbetätigungsvorrichtung 27 angeordnet ist.
Auf die Halterung 3 ist ein Zwischenstück 28 geschraubt,
welches die Basis 4 für die Befestigung der fernsteuerbaren
Betätigungseinrichtung 2 aufweist. In die Drehmitnahme der
Ritzelwelle 8 ist ein Hebel 29 eingesteckt und auf die
Ventil-Körper-Welle 20 ist drehfest ein Handhebel 30 aufgesteckt, an welchem eine federnde Klinke 31 befestigt ist.
Die Klinke 31 weist eine Nase 32 auf, welche in eine
Ausnehmung 33 des Hebels 29 greift. Nase 32 und Ausnehmung
33 bilden eine Drehmitnahme zwischen der Ritzelwelle 8 und
der Ventil-Körper-Welle 20 bei Schaltung des Ventils
mittels der Betätigungseinrichtung.

Zum Betätigen des Ventils mittels Hand wird durch herunterdrücken der Klinke 31 gemäss Pfeil 34 von Hand die Nase 32
aus der Ausnehmung 33 bewegt, sodass die Welle 20 ohne
Mitnahme der Ritzelwelle 8 und der Kolben 14 a und 14 b
gedreht werden kann.

Wie aus Fig. 6 ersichtlich, besteht die Halterung 3 aus
zwei Teilen 35 und 36, welche mittels Keilverbindungsteilen 37 und 38 gegen das Gehäuse 39 des Ventils geklemmt
werden. Dies ermöglicht ein rasches Auswechseln der
Betätigungseinrichtung 2.

Durch die verschiedenen Montagemöglichkeiten mit immer
den gleichen Teilen kann die Betätigungseinrichtung an
verschiedene Ventilgrössen und Arten angepasst werden.
Es sind folgende auch untereinander kombinierbare
Ausführungsvarianten möglich

- mit einem oder zwei Kolben

_-7-_

- mit einseitiger Federkraftbetätigung oder beidseitig mit einem Druckmedium
- mit oder ohne Handbetätigungsvorrichtung
- mit Stellungsanzeige direkt oder mit einem elektrischen Signale erzeugenden Stellungsmelder
- Möglichkeit zur Umkehr der Schaltbewegung durch unterschiedliche Montage der Kolben.

Alle Teile ausser Schrauben und Federn sind so gestaltet, dass diese vorteilhafterweise aus Kunststoff im Spritzgussverfahren ohne oder nur mit sehr geringer mechanischer Bearbeitung herstellbar sind.

Durch die baukastenförmige Ausbildung mit vielen gleichartigen Teilen sind geringe Formkosten und Lagerhaltungskosten gewährleistet.

Als Ventile können vorzugsweise Zweig-Wege-Ventile bzw. Hähne wie z.B. Kugelhähne, Kegelhähne, Drosselklappenventile usw. verwendet werden.

_ 1 _

<u>P a t e n t a n s p r ü c h e</u>

2388/FIP

1. Ventileinrichtung mit einer fernbesteuerbaren Betätigungseinrichtung, welche mindestens einen, mittels einem
Druckmedium betätigbaren Kolben aufweist, welcher
mittels einer daran angeordneten Zahnstange eine, mit
der Ventilkörper-Welle kuppelbare Ritzelwelle betätigt
und wobei die Betätigungseinrichtung mittels einer, an
das Gehäuse des Ventils anklemmbaren Halterung mit dem
Ventil verbindbar ist, dadurch gekennzeichnet, dass die
Betätigungsvorrichtung (2) zur wahlweisen Montage mit
einem Kolben (14 a) oder mit zwei gegenläufigen Kolben
(14 a, 14 b) baukastenförmig ausgebildet ist, wobei
der oder die Kolben (14 a, 14 b) wahlweise entweder
auf beiden Kolbenseiten mit einem Druckmedium beaufschlagbar ist bzw. sind oder nur an einer Kolbenseite
gegen den Druck von Rückstellfedern (23) beaufschlagbar ist bzw. sind.

2. Ventileinrichtung nach Anspruch 1, dadurch gekennzeichnet, dass nur eine Baugrösse der Betätigungsvorrichtung
(2) mit wahlweise einem oder zwei Kolben (14 a, 14 b)
mittels unterschiedlicher Halterungen (3 a, 3 b) und
unterschiedlicher Kupplungsteile (19 a, 19 b) zwischen der Ritzelwelle (8) und der Ventilkörperwelle
(20) mit unterschiedlichen Baugrössen der Ventile (1 a,
1 b) verbindbar sind.

3. Ventileinrichtung nach Anspruch 1 oder 2, dadurch gekennzeichnet, dass das Gehäuse (5) der Betätigungseinrichtung (2) ein Mittelteil (6) aufweist, welches
mit Lagerbohrungen (7, 7 a) für die Ritzelwelle (8)
und mit einer quer dazu verlaufenden Bohrung (9) versehen ist, wobei wahlweise·entweder beidseits koaxial
zu der Bohrung (9) je ein Zylinderteil (12 a, 12 b)
oder nur an einer Seite ein Zylinderteil (12 a) und
auf der anderen Seite ein Gehäusedeckel (13) angeordnet
ist.

4. Ventileinrichtung nach einem der Ansprüche 1 bis 3,
dadurch gekennzeichnet, dass wahlweise durch ein auf die
Halterung (3) aufsetzbares Zwischenstück (28) eine
Handbetätigungsvorrichtung (27) zwischen der fernsteuerbaren Betätigungseinrichtung (2) und dem Ventil (1)
montierbar ist.

5. Ventileinrichtung nach Anspruch 4, dadurch gekennzeichnet, dass die Handbetätigungsvorrichtung (27) einen
mit der Ritzelwelle (8) drehfest verbundenen Hebel
(29) und einen mit der Ventilkörper-Welle (20) drehfest verbundenen Handhebel (30) aufweist, wobei eine
Drehmitnahme (31, 32, 33) zwischen den beiden Hebeln (29,
30) angeordnet ist.

6. Ventileinrichtung nach Anspruch 5, dadurch gekennzeichnet, dass die Drehmitnahme eine am Handhebel angeordnete
federnde Klinke (31) aufweist, welche in eine Ausnehmung (33) des Hebel (29) eingreift und für eine Handbetätigung des Ventils (1) von Hand aus dieser Ausnehmung (33) ausrastbar ist.

7. Ventileinrichtung nach einem der Ansprüche 1 bis 6,
dadurch gekennzeichnet, dass das Ritzel (16) eine durch
vier teilbare Anzahl Zähne aufweist und dass die Zahnstange (15 a, 15 b) durch eine 180° Drehung des oder der
Kolben (14 a, 14 b) um die Zylinderlängsachse (24)
in zwei unterschiedliche Wirkverbindungen mit dem
Ritzel (16) bringbar ist, um eine Auf-Zu-Ventilkörperbewegung bei einer bestimmten Kolbenbewegungsrichtung in
einer Zu-Auf-Ventilkörperbewegung umzukehren.

8. Ventileinrichtung nach einem der Ansprüche 1 bis 7,
dadurch gekennzeichnet, dass am stirnseitigen oberen
Ende der Ritzelwelle (8) eine Ventil-Stellungs-Anzeige
(21) angeordnet ist.

9. Ventileinrichtung nach einem der Ansprüche 1 bis 7
dadurch gekennzeichnet, dass am stirnseitigen oberen
Ende der Ritzelwelle (8) und am Mittelteil (6)
des Gehäuses (5) ein elektrischer Signale erzeugender
Ventil-Stellungs-Melder (25) angeordnet ist.

Fig.1

Fig. 2

2388/FIP

Fig. 3

Fig. 4

2388/FIP

0141046

Fig. 5

Fig. 6

2388/FIP